# EUROPEAN PATENT SPECIFICATION

(11) **EP 0 509 227 B1**
(45) Date of publication and mention of the grant of the patent: **12.02.1997**
(21) Application number: 92103999.6
(22) Date of filing: 09.03.1992
(51) Int. Cl.: G06F 11/20

(54) **Processing apparatus having a backup processor**
Verarbeitungseinrichtung mit Reserveprozessor
Appareil de traitement avec processeur de sauvegarde

(30) Priority: 19.04.1991 JP 113651/91; 31.05.1991 JP 156174/91
(43) Date of publication of application: 21.10.1992
(73) Proprietor: MITSUBISHI DENKI KABUSHIKI KAISHA, Nagasaki (JP)
(72) Inventor: Noritaka, Egami, c/o MITSUBISHI DENKI K.K., Nagasaki (JP)
(74) Representative: KUHNEN, WACKER & PARTNER

(56) References cited:
- US-A- 4 351 023
- US-A- 4 872 106
- US-A- 4 959 768

## Description

### BACKGROUND OF THE INVENTION

### Field of the Invention

The present invention relates to a processing apparatus which has a backup capability and is applicable to sequencers, process controllers, and the like.

### Description of the Prior Art

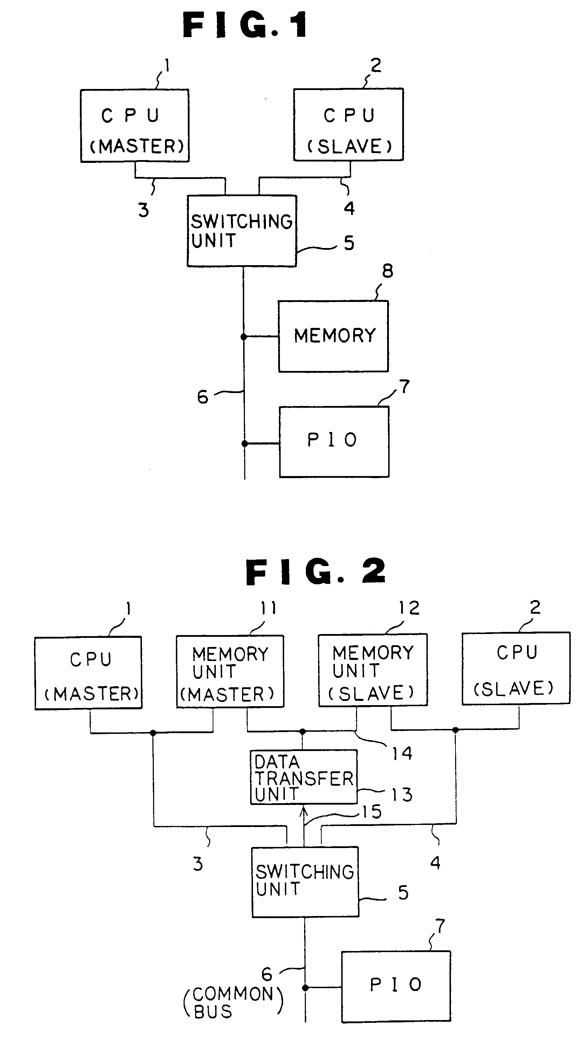

Fig. 1 is a block diagram showing the conventional processing apparatus described in the instruction manual IB-EJ541, page 6, of the CLA card PX2CX manufactured by Mitsubishi Electric Corp. In the figure, indicated by 1 and 2 are central processing units [will be termed "CPU(s)" hereinafter], of which the CPU 1 is operating currently as a master CPU and the CPU 2 is in a standby status as a slave CPU.

Indicated by 3 is a signal bus connected to the CPU 1 for sending the address, data and various control signals, and 4 is a signal bus connected to the CPU 2. 5 is a switching unit for selecting the bus 3 or bus 4, and 6 is a common signal bus connected to the bus 3 or 4 selectively by the switching unit 5. 7 is a process input/output unit (will be termed "PIO unit" hereinafter) connected to the common bus 6, and 8 is a memory connected to the common bus 6 for storing programs and data for the CPUs 1 and 2.

Next, the operation will be explained. The switching unit 5 normally connects the bus 3 to the common bus 6, and the master CPU 1 operates to update data in the memory 8 and PIO unit 7 in accordance with the program stored in the memory 8. If the CPU 1 quits operating due to an internal failure, it is detected by the switching unit 5, which then switches the connection of the common bus 6 from the bus 3 to bus 4 and operates on the slave CPU 2 in standby status to commence the operation as a master CPU. The memory 8 and PIO unit 7 hold data of the time immediately before the occurrence of the CPU failure, and accordingly the switching of CPU can take place without affecting the control object.

However, in the event of a serious failure of the master CPU 1, data in the memory 8 can possibly be destroyed by the disorderly CPU 1, and therefore activating the slave CPU 2 will not be able to proceed a normal processing.

The conventional processing unit is arranged as described above, and if the master CPU 1 falls disorderly and destroys data in the memory 8, it will not be possible to switch the defective CPU to the standby slave CPU 2, or even switching to the slave CPU 2 will not be able to proceed a normal processing, leaving a problem of unreliable backup capability.

Prior arts pertinent to the present invention are described in Japanese Patent Unexamined Publications Nos. 2-242343 and 2-301837, for example.

A processing apparatus with a backup capability and comprising the features of the preamble of claim 1 of the appended claims is known from US-patent 4,872,106.

It is an object of the present invention to adapt a processing apparatus of this kind to the dealing with or handling of tasks or programms of different priority level.

This object, in accordance with the present invention, is achieved by the features of said claim 1.

Further advantageous developments are subject matter of claims 2 to 4.

Thus, the processing apparatus based on the present invention comprises memory units provided in correspondence to CPUs, each memory unit including flip-flops provided in correspondence to tasks and a memory area for storing data, with each flip-flop being set in response to the completion of the corresponding task by the master CPU, and a data transfer unit which implements data transfer from the master's memory unit to the slave's memory unit in response to the setting of a flip-flop in the master's memory unit and resets the flip-flop on completion of data transfer.

The data transfer unit transfers data from the master's memory unit to the slave's memory unit when a flip-flop in the master's memory unit is set in response to the completion of a task by the master CPU, and resets the flip-flop on completion of data transfer so that the task can be initiated, whereby the processing apparatus has a reliable backup capability.

### BRIEF DESCRIPTION OF THE DRAWINGS

- Fig. 1: is a block diagram showing the conventional processing apparatus;
- Fig. 2: is a block diagram showing a processing apparatus having back-up capabilities;
- Fig. 3: is a block diagram showing a memory unit for the apparatus of Fig. 2;
- Fig. 4: is a timing chart showing the operational timing of the processing apparatus of Fig. 2;
- Fig. 5: is a block diagram showing the memory unit based on an embodiment of this invention;
- Fig. 6: is a timing chart showing the operational timing of the case where two tasks exist and if only one flip-flop were used;
- Fig. 7: is a timing chart showing the operational timing of the embodiment of this invention; and
- Fig. 8: is a timing chart showing another operational timing of the embodiment of this invention.

### DETAILED DESCRIPTION OF THE PREFERRED EMBODIMENTS

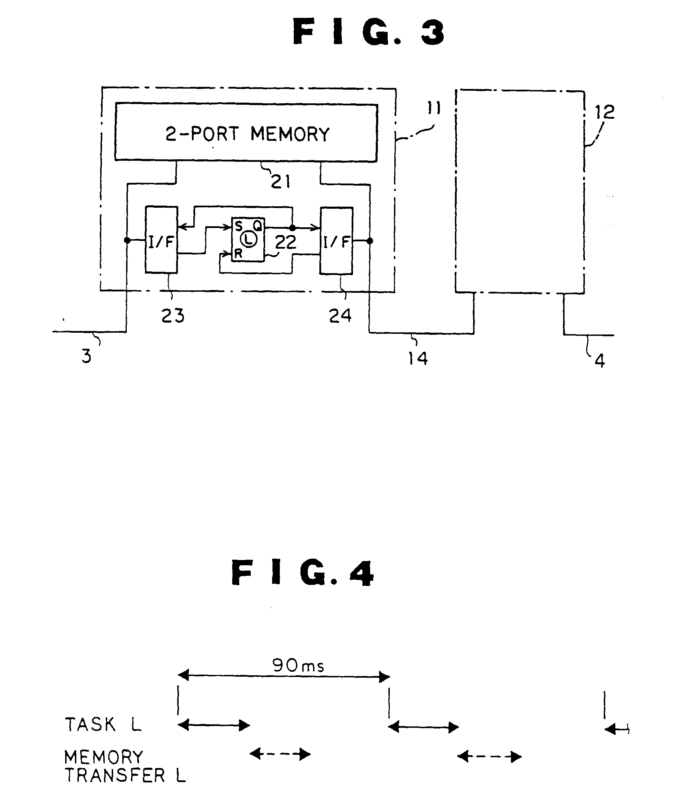

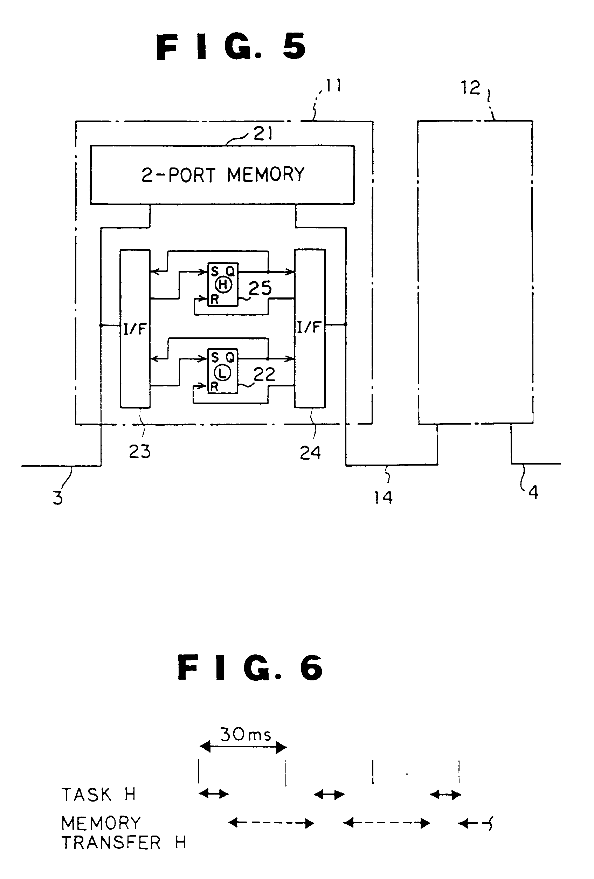

An embodiment of the present invention will be described with reference to Fig. 5 to 8 of the drawings. However, Fig. 2 is a block diagram of a processing apparatus of the general kind of interest, and Fig. 3 is a block diagram showing in detail the arrangement of the memory unit shown in Fig. 2. In Fig. 2, indicated by 1 and 2 are CPUS, 3 and 4 are signal buses, 5 is a switching unit, 6 is a common bus, 7 is a PIO unit, 11 is a memory unit associated with the master CPU 1, and 12 is a memory unit associated with the slave CPU 2. 13 is a data transfer unit which transfers data from the master's memory unit 11 to the slave's memory unit 12 in response to the completion of a task by the master CPU 1. 14 is a bus for sending the address, data and various control signals by being controlled by the data transfer unit 13, and 15 is a signal line for conducting the control signal from the switching unit 5 to the data transfer unit 13.

In Fig. 3, indicated by 21 is a 2-port memory having an internal memory area, and 22 is a flip-flop for controlling the access to the memory unit. 23 is an interface circuit for connecting the flip-flop 22 to the bus 3, and 24 is an interface circuit for connecting the flip-flop 22 to the transfer bus 14. The memory unit 12 has the same structure as the memory unit 11.

Next, the operation will be explained on the timing chart of Fig. 4. It is assumed here that only one task is run by the master CPU 1, and it is a program executed by the CPU 1 (or 2) for carrying out a certain process.

Initially, the master CPU 1 starts the execution of a task L. When execution of the task L completes, the CPU 1 delivers the output data held in the 2-port memory 21 of the memory unit 11 to the PIO unit 7. Subsequently, the CPU 1 sets the flip-flop 22. On detecting the setting of the flip-flop 22, the data transfer unit 13 immediately controls data transfer from memory 11 to memory 12. On completion of data transfer, the data transfer unit 13 resets the flip-flop 22 immediately. On detecting the timing of initiation of the task L, the master CPU 1 confirms the reset state of the flip-flop 22 in the memory unit 11 and initiates the task L. In case the flip-flop 22 is still set, various control modes are possible, e.g., the CPU 1 waits until the flip-flop 22 is reset, or an alarm signal is generated. The master CPU 1 and data transfer unit 13 repeat the foregoing operations.

For better understanding, the following explains the operational time. The CPU 1 expends several tens milliseconds to several hundreds milliseconds to execute the task L in general. It is about 30 ms in the example of Fig. 4. The data delivery time to the PIO unit 7 is about 0.1 ms (100 W x 1 µs/W) in this example. The memory transfer time ranges from several milliseconds to several tens milliseconds, and it is about 25 ms (25 KW x 1 ps/w) in the example of Fig. 3. The interval of task execution ranges from several tens milliseconds to several hundreds millisecond, and it is 90 ms in this example.

If the master CPU 1 develops a serious trouble and quits the operation, the switching unit 5 switches the connection of the common bus 6 from the bus 3 to bus 4. In response to this bus switching, the slave CPU 2 in a standby state commences the operation as a master CPU. The switching unit 5 indicates the switching event to the data transfer unit 13 over the control signal line 15. From this time on, data transfer takes place from the memory unit 12 to the memory unit 11. Consequently, even if the master CPU 1 falls disorderly and destroys the contents of the memory unit 11, normal data is saved in the memory unit 12 and the new master CPU 2 can continue the process.

Fig. 5 is a block diagram showing in detail the arrangement of the memory unit used in an embodiment of this invention which deals with two tasks, a task H being higher in priority than the task L. In the figure, indicated by 25 is a flip-flop provided for the task H. It is assumed that the task H has an execution time of about 10 ms and it is initiated at an interval of about 30 ms.

In case tasks of two different priority levels exist, if the memory unit 11 has only one flip-flop 22 as in the case of Fig. 3, the memory contents for both tasks H and L are transferred, resulting in a memory transfer time of more than 25 ms (a total of 30 ms, assuming that it takes 25 ms for L and 5 ms for H). Accordingly, the task H cannot be initiated at the 30 ms interval in this case, as shown in Fig. 6.

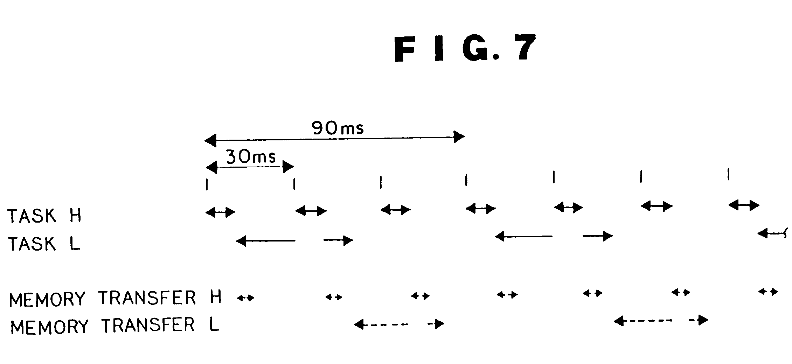

The operation of this embodiment, which overcomes this problem through the additional provision of the flip-flop 25 for the task H, will be explained with reference to Fig. 7. In the figure, the initiation command for task H is issued at a 30 ms interval, and the initiation command for task L is issued simultaneously at every third issuance of the task-H initiation command.

On completion of the task H, the master CPU 1 delivers the output data of the task H to the PIO unit 7 and sets the flip-flop 25. When the task L is initiated, the master CPU 1 implements, during the period when the task H is not run, the execution of the task L, the delivery of the output data of the task L to the PIO unit 7, and the setting of the flip-flop 22. In response to the setting of the flip-flop 25, the data transfer unit 13 transfers the memory contents of the task H from the master's memory unit 11 to the slave's memory unit 12, and resets the flip-flop 25 on completion of the data transfer. Similarly, the data transfer unit 13 responds to the setting of the flip-flop 22 to transfer the memory contents for the task L from the memory unit 11 to the memory unit 12, and then reset the flip-flop 22. The processing of the task H with the higher priority level has the precedence of the task L also in this case.

This embodiment, which enables the faster processing for the higher priority task, necessitates a memory guard function (not shown) as will be explained in the following.

As shown in Fig. 7, the execution of task H and memory transfer for task L take place concurrently, and the execution of task L and memory transfer for task H take place concurrently. During the operation, if the master CPU 1 falls disorderly, the memory contents under transfer can possibly be destroyed. The preceding embodiment of Fig. 4 is free from this problem since the task execution and memory transfer do not take place concurrently.

The possibility of the above-mentioned problem is eliminated through the definite separation of data memory areas for the task H and task L, and the provision of the exclusive write-enable function (reading is unrestricted) for the CPU 1 or memory unit 11. This counter measure prevents a memory destruction caused by the disorderly master CPU 1 from spreading to the slave's memory unit 12.

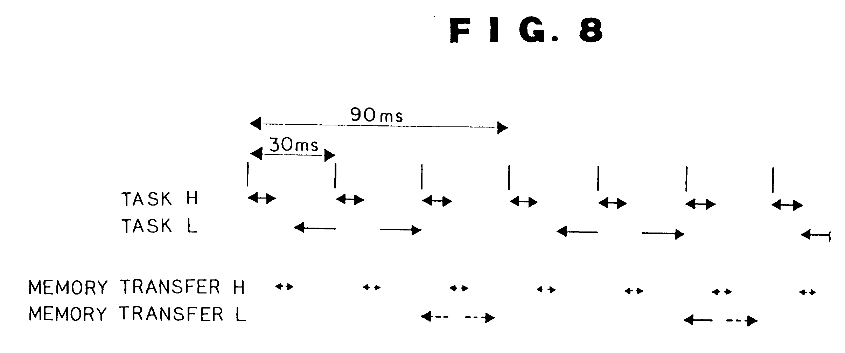

The operational timing shown in Fig. 7 reveals that there is a significant restriction of communication between the task H and task L. A manner of alleviating the restriction will be explained with reference to the timing chart of Fig. 8. The task-H initiation command is issued at a 30 ms interval, with the task-L initiation command being issued simultaneously at every third issuance of the task-H initiation command, in the same manner as shown in Fig. 7. The CPU 1 responds to the completion of task H to deliver the output data produced in the task H to the PIO unit 7 and set the flip-flop 25. At this time, initiation of the task L is held until the transfer of the memory contents for the task H by the transfer unit 13 is completed. The subsequent process is identical to the manner shown in Fig. 7.

Accordingly, the manner of Fig. 8 has a concurrent implementation of task execution and memory transfer only for the execution of task H and memory transfer for the task L, and it necessitates the exclusive memory write control only during the execution of task H, facilitating the communication between the task H and task L.

Although the foregoing embodiment is the case of two kinds of tasks H and L, the number of kinds of tasks may be three or more.

As described above, the processing apparatus is provided, in correspondence to a plurality of tasks, with memory units each incorporating flip-flops which are set in response to the completion of task execution of the master CPU and a data storage area, and when a flip-flop in the master's memory unit is set in response to the completion of task execution of the master CPU, data in the relevant memory area is transferred from the master's memory unit to the slave's memory unit and the flip-flop is reset on completion of data transfer so that the task can be initiated, whereby the data which has been transferred to the slave's memory unit is prevented from being destroyed in the event of disorder of the master CPU, and consequently the slave CPU which now takes control in place of the defective master CPU can surely back up the process with the normal data.

## Claims

1. A processing apparatus comprising
- a first CPU (1) and a second CPU (2), said second or said first CPU commencing operation if said first or said second CPU, respectively, falls defective during its operation;
- a first memory unit (11) connected to said first CPU (1) via a first bus and a second memory (12) connected to said second CPU (2) via a second bus; and
- a data transfer unit (13) which, when a currently operating one of said first and second CPU's (1, 2) has written a series of data into the corresponding one of said first and second memory units (11, 12) in accordance with completion of execution of a task, transfers data that has been written into the memory unit corresponding to said operating CPU, to the memory unit corresponding to the currently not operating CPU,
*characterized in that* each of said first and second memory units (11, 12) consists of
- a 2-port memory (21) having a first port (3; 4) for data access by the corresponding CPU (1, 2) and a second port (14) for data access by said data transfer unit (13) and also having separate data memory areas each allocated to one of a plurality of tasks (H, L) and adapted to be write-enabled separately and, during transfer, to be transferred in its entirety as allocated to the respective task; and
- a plurality of flip-flops (22, 25) corresponding to said tasks run by the respective operating CPU (1; 2), each of said flip-flops (22, 25) being set by the operating CPU (1; 2) that has completed a corresponding task, and being reset by said data transfer unit (13) upon completion of a data transfer.

2. A processing apparatus according to claim 1, wherein said data transfer unit (13) makes access for data transfer only to a data memory area used by a task (H, L) corresponding to a set one of said flip-flops (22, 25).

3. A processing apparatus according to claim 2, wherein the respective operating CPU (1, 2) operates, upon completing one task (H, L) and when there is one other task with a ready status, to run said other task immediately.

4. A processing apparatus according to claim 2, wherein the respective operating CPU (1; 2) operates, upon detecting the ready status of a lower-priority task at the completion of execution of a higher-priority task, to execute said lower-priority task after the flip-flop (22, 25) corresponding to the higher-priority task is reset.

## Patentansprüche

1. Verarbeitungsvorrichtung, die
- eine erste zentrale Verarbeitungseinheit (1) und eine zweite zentrale Verarbeitungseinheit (2), wobei die zweite oder die erste zentrale Verarbeitungseinheit einen Betrieb beginnt, falls die erste bzw. zweite zentrale Verarbeitungseinheit während ihres Betriebs unbrauchbar wird;
- eine erste Speichereinheit (11), die über einen ersten Bus mit der ersten zentralen Verarbeitungseinheit (1) verbunden ist, und einen zweiten Speicher (12), der über einen zweiten Bus mit der zweiten zentralen Verarbeitungseinheit (2) verbunden ist; und
- eine Datenübertragungseinheit (13) aufweist, welche, wenn eine gegenwärtig arbeitende der ersten und zweiten zentralen Verarbeitungseinheiten (1, 2) in Übereinstimmung mit einem Vollenden eines Ausführens einer Aufgabe eine Reihe von Daten in die entsprechende der ersten und zweiten Speichereinheiten (11, 12) geschrieben hat, Daten, die in die Speichereinheit geschrieben worden sind, die der arbeitenden zentralen Verarbeitungseinheit entspricht, zu der Speichereinheit überträgt, die der gegenwärtig nicht arbeitenden zentralen Verarbeitungseinheit entspricht,
*dadurch gekennzeichnet, daß* jede der ersten und zweiten Speichereinheiten (11, 12) aus
- einem Zweitor-Speicher (21), der ein erstes Tor (3; 4) zum Datenzugriff durch die entsprechende zentrale Verarbeitungseinheit (1, 2) und ein zweites Tor (14) zum Datenzugriff durch die Datenübertragungseinheit (13) aufweist, und ebenso getrennte Datenspeicherbereiche aufweist, von denen jeder einer von einer Mehrzahl von Aufgaben (H, L) zugeordnet ist und in der Lage ist, getrennt zum Schreiben freigegeben zu werden, und während eines Übertragens in ihrer Gesamtheit, wie sie der jeweiligen Aufgabe zugeordnet sind, übertragen zu werden; und
- einer Mehrzahl von Flipflops (22, 25) besteht, die den Aufgaben entsprechen, die durch die jeweilige arbeitende zentrale Verarbeitungseinheit (1; 2) ablaufen, wobei jedes der Flipflops (22, 25) durch die arbeitende zentrale Verarbeitungseinheit (1; 2), die eine entsprechende Aufgabe vollendet hat, gesetzt wird und nach einem Vollenden einer Datenübertragung von der Datenübertragungseinheit (13) zurückgesetzt wird.

2. Verarbeitungsvorrichtung nach Anspruch 1, bei der die Datenübertragungseinheit (13) einen Zugriff zur Datenübertragung lediglich auf einen Datenspeicherbereich durchführt, der von einer Aufgabe (H, L) verwendet wird, die einem gesetzten der Flipflops (22, 25) entspricht.

3. Verarbeitungsvorrichtung nach Anspruch 2, bei der die jeweilige arbeitende zentrale Verarbeitungseinheit (1, 2) nach einem Vollenden einer Aufgabe (H, L) und wenn es eine andere Aufgabe mit einem Bereitschaftszustand gibt, arbeitet, um die andere Aufgabe sofort ablaufen zu lassen.

4. Verarbeitungsvorrichtung nach Anspruch 2, bei der die jeweilige arbeitende zentrale Verarbeitungseinheit (1, 2) nach einem Erfassen des Bereitschaftszustands einer Aufgabe mit niedrigerer Priorität bei dem Vollenden eines Ausführens einer Aufgabe mit höherer Priorität arbeitet, um die Aufgabe mit niedrigerer Priorität auszuführen, nachdem das Flipflop (22, 25), das der Aufgabe mit höherer Priorität entspricht, zurückgesetzt worden ist.

## Revendications

1. Appareil de traitement comprenant
- une première CPU (1) et une seconde CPU (2), ladite seconde ou ladite première CPU commençant à fonctionner si ladite première ou ladite seconde CPU, respectivement, tombe en panne pendant son fonctionnement;
- une première unité de mémoire (11) reliée à ladite première CPU (1) par l'intermédiaire d'un premier bus et une seconde mémoire (12) reliée à ladite seconde CPU (2) par l'intermédiaire d'un second bus; et
- une unité de transfert de données (13) qui, lorsque l'une fonctionnant actuellement desdites première et seconde CPU (1, 2) a écrit une série de données dans l'une correspondante desdites première et seconde unités de mémoire (11, 12) selon l'achèvement d'exécution d'une tâche, transfert des données qui ont été écrites dans l'unité de mémoire correspondant à ladite CPU en fonctionnement, à l'unité de mémoire correspondant à la CPU ne fonctionnant pas actuellement,
*caractérisé en ce que* chacune desdites première et seconde unités de mémoire (11, 12) consiste de
- une mémoire à 2 ports (21) ayant un premier port (3; 4) pour accès à des données par la CPU correspondante (1, 2) et un second port (14) pour accès à des données par ladite unité de transfert (13) et ayant également des zones de mémoire de données séparées chacune attribuée à l'une d'une pluralité de tâches (H, L) et adaptée pour être écrite-validée séparément et, pendant le transfert, pour être transférée dans sa totalité comme allouée à la tâche respective; et
- un certain nombre de bascules (22, 25) correspondant auxdites tâches exécutées par la CPU en fonctionnement respective (1; 2), chacune desdites bascules (22, 25) étant établie par la CPU en fonctionnement (1; 2) qui a accompli une tâche correspondante et étant réinitialisée par ladite unité de transfert de données (13) lors de l'accomplissement d'un transfert de données.

2. Appareil de traitement selon la revendication 1, dans lequel l'unité de transfert de données précitée (13) effectue un accès pour transfert de données seulement à une zone de mémoire de données utilisée par une tâche (H, L) correspondant à l'une établie des bascules précitées (22, 25).

3. Appareil de traitement selon la revendication 2, dans lequel la CPU en fonctionnement respective (1, 2) fonctionne, lors de l'accomplissement d'une tâche (H, L) et lorsqu'il y a une autre tâche avec un statut prêt, pour exécuter ladite autre tâche immédiatement.

4. Appareil de traitement selon la revendication 2, dans lequel la CPU en fonctionnement respective (1; 2) fonctionne, en détectant l'état prêt d'une tâche de priorité plus basse à l'accomplissement d'exécution d'une tâche de priorité plus élevée, pour exécuter ladite tâche de priorité plus basse après que la bascule (22, 25) correspondant à la tâche de priorité plus élevée est réinitialisée.
